Europäisches Patentamt

European Patent Office

Office européen des brevets

(19)

(11) Publication number: **0 027 327**

**A1**

(12) **EUROPEAN PATENT APPLICATION**

(21) Application number: **80303389.3**

(22) Date of filing: **26.09.80**

(51) Int. Cl.³: **A 01 N 57/16**
//(A01N57/16, 53/00)

(30) Priority: **01.10.79 US 80962**

(43) Date of publication of application:
**22.04.81 Bulletin 81/16**

(84) Designated Contracting States:
**AT BE CH DE FR IT LI NL SE**

(71) Applicant: **THE DOW CHEMICAL COMPANY**
**2030 Abbott Road Post Office Box 1967**
**Midland, Michigan 48640(US)**

(72) Inventor: **Larson, Larry Leverne**
**5555 Michigan Boulevard**
**Concord, California(US)**

(74) Representative: **Allard, Susan Joyce et al,**
**BOULT, WADE & TENNANT 27 Furnival street**
**London EC4A 1PQ(GB)**

(54) **Insecticidal synergistic mixtures of 0,0-diethyl 0-(3,5,6-trichloro-2-pyridinyl)phosphorothioate and (S)alpha-cyano-3-phenoxybenzyl-cis(+/-)-3-(2,2-dibromoethenyl)-2,2-dimethylcyclopropane carboxylate and method of killing or controlling insects.**

(57) Insecticidal compositions containing a mixture of 0,0-diethyl 0-(3,5,6-trichloro-2-pyridinyl)-phosphorothioate and (S) α cyano-3-phenoxybenzylcis-(+)-3-(2,2-dibromoethenyl)-2,2-dimethylcyclopropane carboxylate are disclosed. Such compositions are useful in the kill and control of insects, particularly insects of the Lepidoptera order and especially of the genus Heliothis.

EP 0 027 327 A1

Croydon Printing Company Ltd.

## INSECTICIDAL SYNERGISTIC MIXTURES OF O,O-DIETHYL O-(3,5,6-TRICHLORO-2-PYRIDINYL)PHOSPHOROTHIOATE AND (S) α CYANO-3-PHENOXYBENZYL-CIS-(±)-3-(2,2-DIBROMO-ETHENYL)-2,2-DIMETHYLCYCLOPROPANE CARBOXYLATE AND METHOD OF KILLING OR CONTROLLING INSECTS

This invention relates to new insecticidal compositions which are useful in the kill and control of insects particularly insects of the Lepidoptera order and especially of the genus Heliothis. These compositions comprise mixtures of O,O-diethyl O-(3,5,6-trichloro-2-pyridinyl)phosphorothioate and (S) α cyano-3-phenoxybenzyl-cis-(+)-3-(2,2-dibromoethenyl)--2,2-dimethylcyclopropane carboxylate. It has been found that the toxic ingredients of said compositions are mutually activating.

The O,O-diethyl O-(3,5,6-trichloro-2-pyridinyl)-phosphorothioate employed in accordance with the teachings of the present invention is a solid material melting at ∿41°-42°C.

The (S) α cyano-3-phenoxybenzyl-cis-(+)-3-(2,2-dibromoethenyl)-2,2-dimethylcyclopropane carboxylate employed in accordance with the teachings of the present invention is a solid material melting at 99°-100°C.

28,549-F                    -1-

The new insecticidal composition of the present invention comprises 1 part by weight of O,O-diethyl O-(3,5,6-trichloro-2-pyridinyl)phosphorothioate and from 1/128 to 1/2 part by weight of (S) α cyano-3-phenoxybenzyl-cis-(+)-3-(2,2-dibromoethenyl)-2,2-dimethylcyclopropane carboxylate, i.e. a ratio of 2:1 to 128:1. A preferred ratio is from 4:1 to 128:1 with the most preferred ratio being from 8:1 to 128:1.

These insecticidal compositions are especially effective in killing and controlling insects, particularly Lepidoptera, especially Heliothis species, which infest crops such as corn, soybeans, tobacco and particularly cotton.

The mixtures of active compounds of the invention have been found to possess good activity against Heliothis species. Accordingly, the invention also comprises methods for controlling such insects with a pesticidally effective amount of the active compound mixture. For such uses the unmodified active materials of the present invention can be employed. However, an insecticidally-effective amount of the active materials in admixture with an inert material, as an adjuvant or carrier therefor, in solid or liquid form may also be employed. Thus, for example, the active mixture can be dispersed on a finely divided solid and employed therein as a dust. Also, the active mixture, as liquid concentrates or solid compositions comprising the active mixture, can be dispersed in water, typically with the aid of a wetting agent, and the resulting aqueous dispersion employed as a spray. In other procedures, the active mixture can be employed as a constituent of organic liquid compositions, oil-in-water and water-in-oil emulsions, or water

28,549-F                    -2-

dispersions, with or without the addition of wetting, dispersing, or emulsifying agents.

Suitable adjuvants of the foregoing type are well known to those skilled in the art. The methods of applying the solid or liquid pesticidal formulations similarly are well known to the skilled artisan.

As organic solvents used as extending agents there can be employed hydrocarbons, e.g. benzene, toluene, xylene, kerosene, diesel fuel, fuel oil, and petroleum naphtha, ketones such as acetone, methyl ethyl ketone and cyclohexanone, chlorinated hydrocarbons such as carbon tetrachloride, chloroform, trichloroethylene, and perchloroethylene, esters such as ethyl acetate, amyl acetate and butyl acetate, ethers, e.g., ethylene glycol monomethyl ether and diethylene glycol monomethyl ether, alcohols, e.g., methanol, ethanol, isopropanol, amyl alcohol, ethylene glycol, propylene glycol, butyl carbitol acetate and glycerine. Mixtures of water and organic solvents, either as solutions or emulsions, can be employed.

The active mixtures can also be applied as aerosols, e.g., by dispersing them in air by means of a compressed gas such as dichlorodifluoromethane or trichlorofluoromethane and other such materials.

The active mixture of the present invention can also be applied with adjuvants or carriers such as talc, pyrophyllite, synthetic fine silica, attapulgus clay, kieselguhr, chalk, diatomaceous earth, lime, calcium carbonate, bentonite, fuller's earth, cottonseed hulls, wheat flour, soybean flour, pumice, tripoli, wood flour, walnut shell flour, redwood flour and lignin.

As stated, it is frequently desirable to incorporate a surface active agent in the compositions of the present invention. Such surface active or wetting agents are advantageously employed in both the solid and liquid compositions. The surface active agent can be anionic, cationic or nonionic in character.

Typical classes of surface active agents include alkyl sulfonate salts, alkylaryl sulfonate salts, alkylaryl polyether alcohols, fatty acid esters of polyhydric alcohols and the alkylene oxide addition products of such esters, and addition products of long chain mercaptans and alkylene oxides. Typical examples of such surface active agents include the sodium alkylbenzene sulfonates having 10 to 18 carbon atoms in the alkyl group, alkylphenol ethylene oxide condensation products, e.g., p-isooctylphenol condensed with 10 ethylene oxide units, soaps, e.g., sodium stearate and potassium oleate, sodium salt of propylnaphthalene sulfonic acid, di(2-ethylhexyl)-ester of sodium sulfosuccinic acid, sodium lauryl sulfate, sodium decane sulfonate, sodium salt of the sulfonated monoglyceride of coconut fatty acids, sorbitan sesquioleate, lauryl trimethyl ammonium chloride, octadecyl trimethyl ammonium chloride, polyethylene glycol lauryl ether, polyethylene glycol esters of fatty acids and rosin acids, e.g., Ethofat* 7 and 13, sodium N-methyl-N-oleyl taurate, Turkey Red Oil, sodium dibutyl naphthalene sulfonate, sodium lignin sulfonate,

---

* Registered Trade Mark polyethylene glycol stearate, sodium dodecylbenzene sulfonate tertiary dodecyl polyethylene glycol thioether (nonionic 218), long chain ethylene oxide-propylene oxide condensation products, e.g., Pluronic* 61 (molecular weight 1000), polyethylene glycol ester of tall oil acids, sodium octyl phenoxyethoxyethyl sulfate, tris(polyoxyethylene)-sorbitan monostearate (Tween* 60), and sodium dihexyl sulfosuccinate.

The concentration of the active mixtures in liquid formulations generally is from 0.01 to 95 percent by weight or more. Concentrations of from 0.1 to 50 weight percent are often employed. In formulations to be employed as concentrates, the active materials can be present in a concentration of from 5 to 98 weight percent. In dusts or dry formulations, the concentration of the active ingredient can be from 0.01 to 95 weight percent or more; concentrations of from 0.1 to 50 weight percent are often conveniently employed. The active compositions can also contain other compatible additaments, for example, plant growth regulants and pesticides.

The present compositions can be applied by the use of power-dusters, boom and hand sprayers, spray-dusters and by other conventional means. The compositions can also be applied from airplanes as a dust or a spray.

The active mixtures of this invention are usually applied at an approximate rate of from 1/16

---

* Registered Trade Mark

pound to 5 pounds or more per acre (0.07 to 5.6 kg/-hectare), but lower or higher rates may be appropriate in some cases. A preferred application rate is from 1/2 pound to 2 pounds per acre (0.56 to 2.24 kg/hectare).

The following Example illustrates the present invention and the manner by which it can be practiced.

Example

A study was conducted to determine the effectiveness and synergistic response of various combinations of O,O-diethyl O-(3,5,6-trichloro-2-pyridinyl)phosphorothioate and (S) α cyano-3-phenoxybenzyl-cis-(+)-3-(2,2--dibromoethenyl)-2,2-dimethylcyclopropane carboxylate in the control of Heliothis insects.

Test solutions were prepared by admixing predetermined amounts of each of the above compounds in predetermined amounts of water containing predetermined amounts of acetone and Triton X155 surfactant.

Tobacco leaf discs, 3 inches (7.62 cm) in diameter were dipped into one of the above mixtures and placed in an open petri dish to dry. After the leaf discs were dry, 5 late second instar (approximately 3-day old) tobacco bud worms (Heliothis virescens) were placed in each dish and the dishes covered. All treatments were run in triplicate and on two different days. Mortality was recorded 48 hours after treatment with moribund larvae unable to crawl their own body length being counted as dead. In this test method, intoxication occurred through contact with and feeding upon treated plants.

**0027327**

The results of this study are set forth below in Table I.

0027327

-8-

TABLE I

| Test No. (1) | Chemical (2) | Amount in PPM | Chemical (3) | Amount in PPM | Ratio of A to B |
|---|---|---|---|---|---|
| 1 | - | - | - | - | - |
| 2 | A | 12.5 | - | - | - |
| 3 | A | 25 | - | - | - |
| 4 | A | 50 | - | - | - |
| 5 | A | 100 | - | - | - |
| 6 | - | - | B | 0.38 | - |
| 7 | - | - | B | 0.75 | - |
| 8 | - | - | B | 1.5 | - |
| 9 | - | - | B | 3.1 | - |
| 10 | - | - | B | 6.2 | - |

## TABLE I (Continued)

| Test No.[1] | Expected Control in Percent[4] | Actual Control in Percent | Percent Increase Over Expected Control[5] |
|---|---|---|---|
| 1 | - | 0 | - |
| 2 | - | 3 | - |
| 3 | - | 13 | - |
| 4 | - | 37 | - |
| 5 | - | 70 | - |
| 6 | - | 17 | - |
| 7 | - | 30 | - |
| 8 | - | 57 | - |
| 9 | - | 83 | - |
| 10 | - | 93 | - |

0027327

28,549-F

TABLE I

| Test No.[1] | Chemical[2] | Amount in PPM | Chemical[3] | Amount in PPM | Ratio of A to B |
|---|---|---|---|---|---|
| 11 | A | 12.5 | B | 0.38 | 32:1 |
| 12 | A | 12.5 | B | 0.75 | 16:1 |
| 13 | A | 12.5 | B | 1.5 | 8:1 |
| 14 | A | 12.5 | B | 3.1 | 4:1 |
| 15 | A | 12.5 | B | 6.2 | 2:1 |
| 16 | A | 25 | B | 0.38 | 64:1 |
| 17 | A | 25 | B | 0.75 | 32:1 |
| 18 | A | 25 | B | 1.5 | 16:2 |

0027327

TABLE I (Continued)

| Test No.[1] | Expected Control in Percent[4] | Actual Control in Percent | Percent Increase Over Expected Control[5] |
|---|---|---|---|
| 11 | 20 | 30 | 50 |
| 12 | 32 | 43 | 39 |
| 13 | 58 | 80 | 38 |
| 14 | 84 | 93 | 11 |
| 15 | 93 | 97 | 4 |
| 16 | 28 | 40 | 43 |
| 17 | 39 | 47 | 21 |
| 18 | 63 | 87 | 38 |

TABLE I

| Test No.[1] | Chemical[2] | Amount in PPM | Chemical[3] | Amount in PPM | Ratio of A to B |
|---|---|---|---|---|---|
| 19 | A | 25 | B | 3.1 | 8:1 |
| 20 | A | 25 | B | 6.2 | 4:1 |
| 21 | A | 50 | B | 0.38 | 128:1 |
| 22 | A | 50 | B | 0.75 | 64:1 |
| 23 | A | 50 | B | 1.5 | 32:1 |
| 24 | A | 50 | B | 3.1 | 16:1 |
| 25 | A | 50 | B | 6.2 | 8:1 |
| 26 | A | 100 | B | 0.75 | 128:1 |
| 27 | A | 100 | B | 1.5 | 64:1 |

28,549-F

-12-

-12-

0027327

28,549-F

TABLE I (Continued)

| Test No.[1] | Expected Control in Percent[4] | Actual Control in Percent | Percent Increase Over Expected Control[5] |
|---|---|---|---|
| 19 | 85 | 97 | 14 |
| 20 | 94 | 100 | 6 |
| 21 | 48 | 57 | 19 |
| 22 | 56 | 63 | 13 |
| 23 | 73 | 97 | 33 |
| 24 | 89 | 100 | 12 |
| 25 | 96 | 100 | 4 |
| 26 | 79 | 73 | 0 |
| 27 | 87 | 100 | 15 |

0027327

28,549-F

## TABLE I

| Test No.[1] | Chemical[2] | Amount in PPM | Chemical[3] | Amount in PPM | Ratio of A to B |
|---|---|---|---|---|---|
| 28 | A | 100 | B | 3.1 | 32:1 |
| 29 | A | 100 | B | 6.2 | 16:1 |

(1) Test Nos. 1-10 are control runs with Test 1 being a no chemical control (surfactant/acetone/water alone).

(2) Chemical A represents O,O-diethyl O-(3,5,6-trichloro-2-pyridinyl)phosphorothioate.

(3) Chemical B represents (S) a cyano-3-phenoxybenzyl-cis-(+)-3-(2,2--dibromoethenyl)-2,2-dimethylcyclopropane carboxylate.

0027327

TABLE I (Continued)

| Test No.[1] | Expected Control in Percent[4] | Actual Control in Percent | Percent Increase Over Expected Control[5] |
|---|---|---|---|
| 28 | 95 | 100 | 5 |
| 29 | 98 | 100 | 2 |

(4) Expected control = % control by chemical A + % control by chemical B −

$$\frac{\% \text{ control by chemical A} \times \% \text{ control chemical B}}{100}$$

(5) Percent increase over expected control equals $\dfrac{\text{actual control}}{\text{expected control}} \times 100-100$

Data from Table I illustrates that better control was obtained employing the two toxicants together than would be expected from the results obtained from employing each of the two toxicants alone. These data are obtained according to the technique described in Colby, "Calculating Synergistic and Antagonistic Responses of Herbicide Combinations", Weeds, Vol. 15 (1967) pages 20-22 and Colby, "Greenhouse Evaluation of Herbicide Combinations", Proc. NEWCC, No. 19, pages 312-320.

CLAIMS

1. A synergistic insecticidal composition which comprises an inert carrier and a mixture of toxicants consisting essentially of 1 part by weight of O,O-diethyl O-(3,5,6-trichloro-2-pyridinyl)phosphorothioate and from 1/128 to 1/2 part by weight of (S) $\alpha$ cyano-3-phenoxybenzyl-cis-(+)-3-(2,2-dibromoethenyl)-2,2-dimethylcyclopropane carboxylate.

2. A composition as claimed in claim 1 wherein the carrier is an inert liquid carrier.

3. A composition as claimed in claim 1 or claim 2 wherein the mixture of toxicants is present in an amount of from 5 to 95 percent by weight of the total composition.

4. A composition as claimed in claim 1 or claim 2 wherein the composition is present as an aqueous dispersion and the mixture of toxicants is present in an amount of from 0.01 to 50 percent by weight of the total composition.

5. A method of killing and controlling insects which comprises contacting said insects or their habitat with an insecticidally-effective amount of a composition as claimed in any one of claims 1 to 4.

6. A method as claimed in claim 5 wherein the insects are of the genus Heliothis.

7. A method as claimed in claim 5 wherein the composition is employed in amounts of from 1/16 pounds to 5 pounds per acre (0.07 to 5.6 kg/hectare).

CLAIMS for AUSTRIA

1. A synergistic insecticidal composition which comprises an inert carrier and a mixture of toxicants consisting essentially of 1 part by weight of O,O-diethyl O-(3,5,6-trichloro-2-pyridinyl)phosphorothioate and from 1/128 to 1/2 part by weight of (S) α cyano-3-phenoxybenzyl-cis-(+)-3-(2,2-dibromoethenyl)-2,2-dimethylcyclopropane carboxylate.

2. A composition as claimed in claim 1 wherein the carrier is an inert liquid carrier.

3. A composition as claimed in claim 1 or claim 2 wherein the mixture of toxicants is present in an amount of from 5 to 95 percent by weight of the total composition.

4. A composition as claimed in claim 1 or claim 2 wherein the composition is present as an aqueous dispersion and the mixture of toxicants is present in an amount of from 0.01 to 50 percent by weight of the total composition.

5. A method of killing and controlling insects which comprises contacting said insects or their habitat with an insecticidally-effective amount of a composition as claimed in any one of claims 1 to 4.

6. A method as claimed in claim 5 wherein the insects are of the genus Heliothis.

7. A method as claimed in claim 5 wherein the composition is employed in amounts of from 1/16 pounds to 5 pounds per acre (0.07 to 5.6 kg/hectare).

Page of extra claims for Austria

8. A method of preparing a synergistic insecticidal composition, which method comprises mixing an inert carrier with a mixture of toxicants consisting essentially of 1 part by weight of O,O-diethyl O-(3,5,6-trichloro-2-pyridinyl)phosphorothioate and from 1/128 to 1/2 part by weight of (S)α cyano-3-phenoxybenzyl-cis-(+)-3-(2,2-dibromoethenyl)-2,2-dimethylcyclopropane carboxylate.

9. A method as claimed in claim 8 wherein the carrier is an inert liquid carrier.

10. A method as claimed in claim 8 or claim 9 wherein the mixture of toxicants is admixed with the inert carrier in an amount of from 5 to 95 percent by weight of the total composition.

SJA/EA 254

European Patent
Office

**EUROPEAN SEARCH REPORT**

Application number

EP 80 30 3389

| Category | Citation of document with indication, where appropriate, of relevant passages | Relevant to claim |
|---|---|---|
| X | RESEARCH DISCLOSURE, no. 161, September 1977, no. 16176 Homewell, Havant, Hampshire,GB "Pesticide mixture for use in agricultural and animal health outlets", pages 99-100. | 1-7 |
|  | -- |  |
|  | FR - A - 2 213 014 (ARIES) \* Claims; page 1, lines 11-14 \* | 1-7 |
|  | -- |  |
|  | FR - A - 2 374 849 (THE WELLCOME FOUNDATION) \* Claims \* | 1-7 |
|  | ---- |  |

**DOCUMENTS CONSIDERED TO BE RELEVANT**

CLASSIFICATION OF THE APPLICATION (Int Cl.³)

A 01 N 57/16//
(A 01 N 57/16
53/00)

TECHNICAL FIELDS SEARCHED (Int. Cl.³)

A 01 N 57/16
A 01 N 53/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

The present search report has been drawn up for all claims

| Place of search | Date of completion of the search | Examiner |
|---|---|---|
| The Hague | 22-01-1981 | DECORTE |

EPO Form 1503.1  06.78